Europäisches Patentamt

European Patent Office

Office européen des brevets

(11) Publication number: **0 235 603**
**A2**

## EUROPEAN PATENT APPLICATION

(21) Application number: 87101491.6

(51) Int. Cl.⁴: **B01J 2/18**

(22) Date of filing: 04.02.87

(30) Priority: 06.02.86 JP 24591/86

(43) Date of publication of application:
09.09.87 Bulletin 87/37

(84) Designated Contracting States:
BE CH DE FR GB IT LI NL SE

(71) Applicant: KANEGAFUCHI KAGAKU KOGYO
KABUSHIKI KAISHA
2-4 Nakanoshima 3-chome
Kita-ku Osaka-shi Osaka-fu(JP)

(72) Inventor: Eguchi, Tamiyuki
14-5, Koeidai 5-chome Kita-ku
Kobe-shi Hyogo-ken(JP)
Inventor: Tsunomori, Michito
31-17, Shioya-cho 6-chome Tarumi-ku
Kobe-shi Hyogo-ken(JP)

(74) Representative: Türk, Gille, Hrabal
Bruckner Strasse 20
D-4000 Düsseldorf 13(DE)

(54) Process for forming uniform liquid droplets.

(57) A process for forming uniform liquid droplets
having a particle size of not more than 250 μm
which comprises jetting a liquid having a viscosity of
50 to 2,000 of cP through at least one orifice having
a diameter of 20 to 100 μm, while directly vibrating
said liquid at a frequency of 3,00 to 40,000 Hz. The
process is applicable, for instance, to a solution of a
natural or synthetic high polymer, and when liquid
droplets formed from such a solution are solidified,
spherical solid particles having a uniform particle
size useful, for instance, as particles for gel permeation chromatography, a support for catalyst or a
packing for a column are obtained.

F I G . 1

## Process for forming uniform liquid droplets

The present invention relates to a process for forming uniform liquid droplets, and more particularly to a process for forming liquid droplets uniform and fine in their particle size from the liquid having a high viscosity such as a solution containing a natural high polymer substance or a synthetic high polymer substance. When such fine and uniform liquid droplets are solidified as they are, spherical particles having a uniform particle size can be obtained and widely utilized, for instance, as particles for gel permeation chromatography, a support for a catalyst, a packing for a column, and the like.

As one of methods for forming liquid droplets, there has been known a dispersion method in which a liquid to be formed into droplets is dispersed into a dispersion medium incompatible with the liquid by stirring. According to the dispersion method, liquid droplets having a broad particle size distribution are obtained.

As a method for forming liquid droplets other than the dispersion method, there has been known a spray method. According to the spray method, liquid droplets having a broad particle size distribution are obtained alike in the case of adopting the dispersion method.

Recently, a vibration method has been adopted in order to form liquid droplets having a narrow particle size distribution. When a liquid is jetted through a nozzle, if the nozzle is vibrated at a constant frequency or the liquid is directly vibrated, there are formed liquid droplets synchronizing with the vibration. Accordingly, when the flow rate of the liquid is kept constant, there can be obtained uniform liquid droplets having a narrow particle size distribution. The above mentioned phenomenon was already found out in 1950's by N. A. Dimmock [cf. Nature, 166, 686(1950)]. Thereafter, this phenomenon was further analyzed and a condition for forming uniform liquid droplets was proposed by T. Sakai et al [cf. Proceedings of the 2nd International Conference on Liquid Atomization and Spray Systems (Proc. 2nd ICLASS), 27-45(1982)]. T. Sakai et al report that the vibration frequency capable of forming uniform liquid droplets is decided by a hole diameter of a nozzle and a low rate, a viscosity and a surface tension of a liquid, and further by an amplitude of a nozzle when the nozzle is vibrated, and their relationships are shown by a dimensionless formula. In addition to the dimensionless formula by T. Sakai et al, another dimensionless formula is reported by P. Shummer et al. However, the index of the dimensionless formula by P. Shummer et al is quite different from that of the formula by T. Sakai et al, and accordingly, these equations give calculated values quite different from each other [cf. P. Shummer and K. H. Tebel, Proc. 2nd ICLASS, 47-54(1982)]. On the other hand, the found values by P. Shummer et al vary widely and are greatly different from the calculated values.

As to the above-mentioned matter, similar studies are made by other investigators and various different empirical formulas are reported. The reason why there are such differences between the empirical formulas reported is that the experimental conditions are different depending on the investigators. Each of empirical formulas is valid within the range of the experimental condition adopted, but it is not always valid outside the range. Accordingly, it is difficult to forcast whether liquid droplets can be formed or not in a region which has not been attempted in the past.

Table 1 shows instances in which uniform liquid droplets are formed in liquid viscosity ranges relatively near to that aimed in the present invention. As apparent from Table 1, there has been no attempt for forming uniform liquid droplets having a particle size of not more than 250 $\mu$m from a highly viscous solution having a viscosity of 50 to 2000 cP. That is, whether such uniform liquid droplets can be formed or not cannot be forecast from conventional techniques.

Table 1

| Name of literature | Kind of liquid | Viscosity (cP) | Frequency (Hz) | Hole diameter of nozzle (μm) | Diameter of droplet (μm) |
|---|---|---|---|---|---|
| Japanese Unexamined Publication No. 72877/1975 (Japanese Examined Patent Publication No. 33134/1981) | Liquid containing uranium compound and a gelling agent | – | from 4000 to 8000 | 127 | from 250 to 260 |
| Japanese Unexamined Patent Publication No. 102905/1982 | Solution of polymerizable monomers | from 0.98 to 1.40 | from 70 to 7000 | from 60 to 600 | – |
| Proc. 1st ICLASS[*1] 181(1978) by W. E. Yates et al | Insecticide | – | from 100 to 10000, from 11000 to 21000 | from 50 to 400, 125 | from 144 to 803 |
| Rev. Sci. Instrum.[*2] 35, 1349(1964) by J. M. Schneider et al | Water | – | 4500 | 100 | from 50 to 20000 |

- continued -

| Name of literature | Kind of liquid | Viscosity (cP) | Frequency (Hz) | Hole diameter of nozzle (µm) | Diameter of droplet (µm) |
|---|---|---|---|---|---|
| J. Sci. Instrum.[3] 40, 247(1963) by B. J. Mason et al | Water | - | from 300 to 1000 | from 100 to 140 | from 30 to 1000 |
| Proc. 2nd ICLASS 47 (1982) by P. Schummer et al | Water, Aqueous solution of glycerol, 5 %-Aqueous solution of polyvinyl alcohol | - | from 50 to 1200 | from 500 to 1500 | - |
| Proc. 2nd ICLASS 37 (1982) by T. Sakai et al | Sirup | from 30 to 600 | from 10 to 2500 | from 520 to 1290 | - |

Noets     [1]: Proceedings of the 1st International Conference on Liquid Atomization and Spray Systems

          [2]: The Review of Scientific Instruments

          [3]: Journal of Scientific Instruments

For instance, when a liquid having a viscosity of 460 cP, a surface tension of 41 dyne/cm, a density of 1.1 g/cm³ is jetted from a nozzle vibrated at an amplitude of 5 μm and having at least one hole of 50 μm in diameter at a flow rate of 2,000 cm/sec to form uniform liquid droplets, the frequency of vibration of the nozzle required for forming uniform liquid droplets according to the empirical formula of T. Sakai et al is from $1.0 \times 10^5$ to $1.3 \times 10^5$ Hz. When a liquid having a viscosity of 920 cP, a surface tension of 41 dyne/cm, a density of 1.1 g/cm³ is jetted through a nozzle vibrated at an amplitude of 5 μm and having at least one hole of 50 μm in diameter at a flow rate of 3000 cm/sec, the formula of T. Sakai et al requires a frequency of $1.5 \times 10^5$ to $1.9 \times ^5$ Hz.

These two examples show that, according to the empirical formula, a very high frequency is required for obtaining uniform liquid droplets. However, an extensive energy is required for providing an amplitude of vibration of about 5 μm to a nozzle at such a very high frequency, and it is practically very difficult to use such an apparatus.

As understood from the above examples, it is expected that it is difficult to form fine and uniform liquid droplets from solutions having a high viscosity by the vibration process according to conventional techniques.

An object of the present invention is to provide a process for industrially forming uniform and fine liquid droplets having a particle size of not more than about 250 μm from a liquid having a high viscosity of 50 to 2000 cP by a vibration method

The above and other objects of the present invention will become apparent from the description hereinafter.

In accordance with the present invention, there is provided a process for forming uniform liquid droplets having a particle size of not more than 250 μm which comprises jetting a liquid having a viscosity of 50 to 2000 cP through at least one orifice having a diameter of 20 to 100 μm, while directly vibrating the liquid at a frequency of 3,000 to 40,000 Hz.

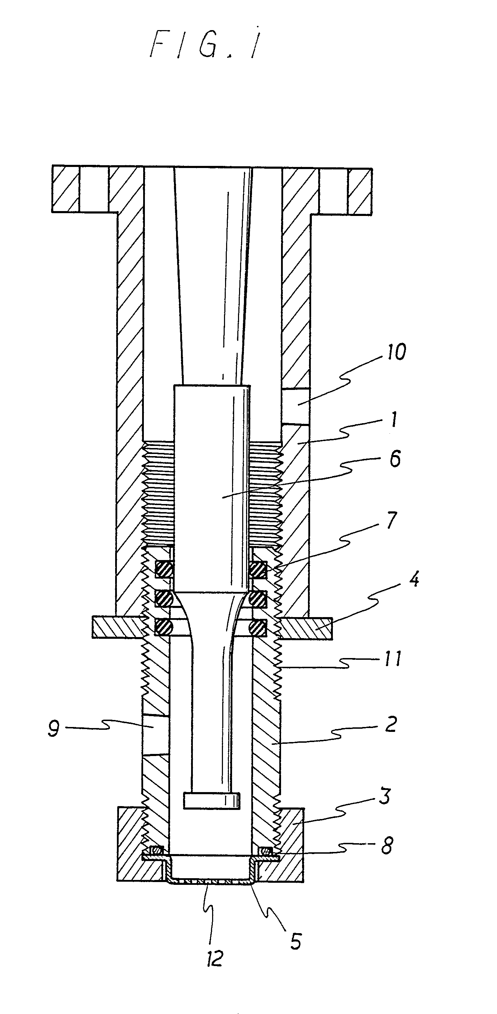

Fig. 1 is a cross sectional view showing a part of an apparatus used in the present invention.

The phenomenon that a liquid column jetted through a nozzle or an orifice is split into liquid droplets has been interested with respect to its theory. For instance, the theory of C. Weber explains as follows: "An initial turbulence generated at an outlet of a nozzle on a liquid column grows with the passage of time and at the time when region of the initial turbulence becomes larger than the diameter of the liquid column, the liquid column is split into a liquid droplet [cf. Zeitschrift für Angewandte Mathematik und Mechanik (Z. angew. Math. Mech.) 11, 136(1931)].

In case of producing uniform liquid droplets by the vibration method on an industrial scale, the initial turbulence must be generated exactly, stably and economically. It is considered that the initial turbulence is generated due to a change in flow rate of jetted liquid at an outlet of the nozzle. It is possible to generate such a change of the flow rate by various methods. For instance, there are a method in which the flow rate itself is changed, a method in which a pressure of the liquid is changed, a method in which the nozzle is vibrated, and the like. Among them, the method by vibrating the nozzle is not economical since a greate energy is required, and the method by changing the flow rate is also not economical since a special pump is required. As compared to these methods, the method of changing the pressure of liquid is advantageous because of simple in an apparatus required and economical. In the process of the present invention, a liquid is ejected through an orifice or orifices, while periodically changing the pressure of the liquid at a frequency of 3,000 to 40,000 Hz. The pressure changed periodically can be stably applied to the liquid with a small energy by, for instance, providing a vibrating plate near the orifice, or by inserting a vibrating rod into the liquid near the orifice.

Fig. 1 is a cross sectional view showing a part of an apparatus used in the invention.

In the present invention, the liquid requires a relatively large jet pressure since the liquid having a high viscosity and orifice plate or nozzle 5 having a small orifice or hole size are used. Accordingly, in order to directly vibrating the liquid, in other words, in order to apply a pressure changed periodically to the liquid, a method inserting a vibrating rod 6 into a cylinder 2 is adopted. The vibrating rod 6 is connected with a suitable vibration generator such as a magnetostrictive vibrator, an electrostrictive vibrator or an electromagnetic coil vibrator. In order to efficiently transmit the vibrational energy to the vibrating rod 6, an O-ring 7 having a small contact resistance is used for sealing a space between the cylinder 2 and the vibrating rod 6. The distance between the orifice plate 5 and the top of the bivrating rod 6 can be suitably controlled by a screw 11 of the cylinder 2 and a nat 4 for fixing the cylinder. The orifice plate 5 is fixed to another end of the cylinder 2 by a nat 3 for fixing the plate 5. Sealing between the orifice plate 5 and the cylinder 2 is ensured by O-ring 8. The cylinder 2 is fixed with a nat 4 to a fixing cylinder 1 for fixing the cylinder 2.

The liquid fed by a gear pump is introduced into the cyliner 2 through an inlet 9 for the liquid and is jetted through the nozzle or orifice 12 while applying the pressure changed periodically to the liquid by reciprocating motion of the vibrating rod 6 over the plate 5. By using such an apparatus, a liquid having a high viscosity, to say nothing of a liquid having a low viscosity, can be jetted through orifices or holes 12 of the plate 5 at a high temperature under high pressure while applying the pressure changed periodically at various frequencies to the liquid. Also, in order to maintain the resonance frequency more stably, a port 10 for a cooling water may be provided in the fixing member 1, if necessary. A multihole nozzle or a perforated plate is usually used as the nozzle or orifice plate 5 (hereinafter referred to as "nozzle 5"). In order to obtain uniform liquid droplets having a particle size of not more than about 250μm, the diameter of the hole of the nozzle 5 must be not more than 100 μm. However, since the liquid droplets having too small particle size become poor in a value in use, it is preferable that the hole diameter of the nozzle is from 20 to 100 μm so that the particle size of the liquid droplets is more than several tens μm.

It is preferable that the distance between the nozzle 5 and the top of the vibrating rod 6 is from 2 to 30 mm. When the frequency is as high as that of supersonic waves, it is preferable that the distance is not less than 5 mm. When the distance is less than 2 mm, cavitation may be caused depending on kinds of the liquid and accordingly, there is a possibility that the heat of the vibrating rod 6 or the inner wall of the nozzle 5 becomes eroded.

The frequency required for stably forming fine and uniform liquid droplets from a liquid having a high viscosity is from 3,000 to 40,000 Hz. When the frequency of the vibrating rod is less than 30,000 Hz, the uniform liquid droplets cannot be obtained even if other conditions for jetting the liquid such as the amplitude or the jet rate is changed. On the other hand, in the larger frequency region, even if a liquid having a high viscosity is used, the uniform liquid droplets can be obtained by suitably controlling the conditions for jetting the liquid. However, when the frequency is more than 40,000 Hz, it is hard to obtain the uniform liquid droplets, because the distance between the liquid droplets adjacent to each other is too small, thus resulting in large collision frequency of liquid droplets.

The uniform liquid droplets formed move at random by air resistance with going away from the nozzle 5, and many liquid droplets collide and reconnect each other. As reported by J. M. Schneider et al, the reconnection of the liquid droplets can be prevented for a relatively long time by electrifying each of the liquid droplets with same electric charge [cf. Rev. Sci, Instr. 35, 1349-(1964)].

It is possible to confirm whether the particle size of the liquid droplets is uniform or not in a usual manner. That is to say, the flashing period of the stroboscope is synchronized with the generation period of the liquid droplets, a photography is carried out, and the diameter of each of the liquid droplets is measured.

The process of the present invention is useful for forming solid particles having a uniform particle size. Liquid droplets are formed according to the process of the invention, for instance, from a solution of a natural high polymer substance, a solution of a synthetic high polymer substance or a sol of an inorganic compound, and then solidified by vaporizing the solvent or dispersion medium from the droplets or by pouring the droplets into a coagulating medium. The obtained solid particles can be utilized, for instance, as particles for gel permeation chromatography or a support for catalyst.

Examples of the natural high polymers or their derivatives are, for instance, cellulose, silk, cellulose acetate, collagen, chitin, and the like. The natural high polymer is not limited thereto, and other natural high polymers can be used.

Examples of the synthetic high polymer are, for instance, polyvinyl alcohol, ethylene-vinyl alcohol copolymer, polyvinyl acetate, polystyrene, nylon, and the like. The synthetic high polymer is not limited thereto, and other synthetic high polymers can be used.

Examples of the sol of the inorganic compounds are, for instance, a sol of silicate compound, a sol of aluminate compound, and the like. The sol is not limited thereto, and other sols can be used.

As a medium used for preparing the solution containing the natural or synthetic high polymer or the sol of inorganic compound, there are exemplified, for instance, dimethyl sulfoxide, dimethyl acetamide, water, N-methyl-2-pyrrolidone, and the like. The medium is not limited thereto, and other mediums can be used.

The solutions and sols containing the above-mentioned components are relatively high in the viscosity. For example, when the uniform liquid droplets are formed from the solution containing the high polymer substrate having a molecular weight of several ten thousands and the formed liquid droplets are solidified by contacting with a gelling agent, it is necessary that the concentration of the high polymer substrate in the solution is at least several percentages by weight for obtaining solid particles having a mechanical strength sufficient to use them for the above-mentioned uses. Such a solution has a viscosity of at least 50 cP. Accordingly, in the present invention, the liquid having a viscosity of 50 to 2000 cP is used. When the viscosity is more than 2000 cP, the jet pressure of the liquid is too high and a specific means is required to the apparatus. Moreover, the use of such a high viscous liquid is not necessary, since the liquid droplets utilizable for the above-mentioned uses can be obtained from a solution having a viscosity of less than 2000 cP.

As mentioned above, uniform liquid droplets having a particle size of not more than 250 μm can be formed by jetting out a liquid having a viscosity of 50 2000 cP through at least one orifice having a diameter of 20 to 100 μm, while directly vibrating the liquid at the frequency of 3,000 to 40,000 Hz.

The frequency capable of giving the uniform liquid droplets is decided depending on the orifice diameter, the flow rate, the viscosity and surface tension of the liquid or the amplitude of the vibrating rod, but does not depend on the composition of the liquid. Accordingly, not only the liquids used in the following Examples but also other liquids can be widely used within the scope of the present invention.

The present invention is more specifically described and explained by means of the following Examples and Comparative Examples in which all percentages and parts are by weight unless otherwise noted. It is to be understood that the present invention is not limited to the Examples, and various changes and modifications may be made in the invention without departing from the spirit and scope thereof.

Examples 1 to 4

An N-methyl-2-pyrrolidone solution of cellulose acetate having a concentration shown in Table 2 was fed to a cylinder of an apparatus shown in Fig. 1 and the solution was jetted through a nozzle having 21 holes of 50 μm in diameter under the conditions shown in Table 2 while vibrating the vibrating rod at a frequency of 25,000 Hz by using a magnetostrictive vibrator to give uniform liquid droplets.

A particle size of the obtained liquid droplets was measured according to the previously explained method. The results are shown in Table 2.

In Table 2, the viscosity is the value measured at 40°C by using a Brookfield viscometer, and the surface tension is the value of N-methyl-2-pyrrolidone.

Since it was difficult to directly measure the amplitude of the top of the vibrating rod present in the cylinder, the amplitude shown in Table 2 is the value measured for the vibrating rod which is not inserted into the no cylinder.

Examples 5 to 7

The procedure of Example 1 as repeated except that the vibrating rod was vibrated by using an electromagnetic coil vibrator under the conditions shown in Table 2 to give uniform liquid droplets.

A particle size of the obtained liquid droplets was measured in the same manner as in Example 1. The results are shown in Table 2.

## Table 2

0 235 603

| Ex. No. | Concentration of the solution (%) | Viscosity (cP) | Surface tension (dyne/cm) | Hole diameter (μm) | Jet rate (cm/sec) | Frequency (Hz) | Amplitude (μm) | Distance between the nozzle and the top of vibrating rod (mm) | Particle size of the uniform liquid droplets (μm) |
|---|---|---|---|---|---|---|---|---|---|
| Ex.1 | 3 | 55 | 41 | 50 | 670 | 25000 | 1 | 15 | 100 |
| Ex.2 | 6 | 460 | 41 | 50 | 2000 | 25000 | 5 | 15 | 144 |
| Ex.3 | 7 | 920 | 41 | 50 | 3000 | 25000 | 5 | 15 | 165 |
| Ex.4 | 7 | 920 | 41 | 50 | 3000 | 25000 | 5 | 5 | 165 |
| Ex.5 | 6 | 460 | 41 | 50 | 1130 | 6500 | 1 | 5 | 188 |
| Ex.6 | 6 | 460 | 41 | 50 | 1130 | 5300 | 1 | 5 | 200 |
| Ex.7 | 6 | 460 | 41 | 50 | 1130 | 3200 | 1 | 5 | 238 |

## Comparative Examples 1 and 2

The procedure of Example 5 was repeated except that the vibrating rod was vibrated at a frequency of 1700 Hz (Comparative Example 1) or a frequency of 2500 Hz (Comparative Example 2). Uniform liquid droplets could not be obtained.

## Examples 8 to 11

The procedure of Example 4 was repeated except that a solution shown in Table 3 was used to give uniform liquid droplets.

A particle size of the obtained liquid droplets was measured in the same manner as in Example 1. The results are shown in Table 3.

Table 3

| Ex. No. | Kind of the solution | Viscosity (cP) | Surface tension (dyne/cm) | Hole diameter (μm) | Jet rate (cm/sec) | Frequency (Hz) | Amplitude (μm) | Distance between the nozzle and the top of vibrating rod (mm) | Particle size of the uniform liquid droplets (μm) |
|---|---|---|---|---|---|---|---|---|---|
| Ex.8 | A*1 | 480 | 43 | 50 | 3000 | 25000 | 5 | 5 | 165 |
| Ex.9 | B*2 | 290 | 31 | 50 | 3000 | 25000 | 5 | 5 | 165 |
| Ex.10 | C*3 | 850 | 73*5 | 50 | 3000 | 25000 | 5 | 5 | 165 |
| Ex.11 | D*4 | 520 | 41*5 | 50 | 3000 | 25000 | 5 | 5 | 165 |

(Notes)  *1 A: 10 % dimethyl sulfoxide solution of ethylene-vinyl alcohol copolymer

 *2 B: 10 % dimethyl acetamide solution of polyvinyl chloride

 *3 C: 10 % aqueous solution of polyvinyl alcohol

 *4 D: 13 % N-methyl-2-pyrrolidone solution of polysulfone ("P-1700" commercially available from Union Carbide Corp.)

 *5  : The surface tension of the solvent measured at 25°C

0 235 603

According to the process for forming the uniform liquid droplets of the present invention, the uniform liquid droplets having a particle size of not more than 250 μm can be formed from a liquid having a viscosity of 50 to 2000 cP. When a solution having a natural high polymer or synthetic high polymer is formed into the uniform liquid droplets according to the present invention and the obtained liquid droplets are solidified as they are, spherical solid particles which are uniform in their diameter can be obtained and they can be suitably used as particles for gel permeation chromatography, a support for a catalyst or a packing for a column.

## Claims

1. A process for forming uniform liquid droplets having a particle size of not more than 250 μm which comprises jetting a liquid having a viscosity of 50 to 2,000 of cP through at least one orifice having a diameter of 20 to 100 μm, while directly vibrating said liquid at a frequency of 3,00 to 40,000 Hz.

2. The process of Claim 1, wherein said liquid is a member selected from the group consisting of a solution of a natural high polymer, a solution of a synthetic high polymer and a sol of an inorganic compound.

3. The process of Claim 1, wherein said liquid is vibrated in a cylinder, to the top of which an orifice plate is attached, by applying a periodically changed pressure to said liquid with a vibrating rod inserted in said liquid.

# F I G . 1